# FASCICULE DE BREVET EUROPEEN

(11) **EP 3 541 539 B1**
(45) Date de publication et mention de la délivrance du brevet: **23.07.2025**
(21) Numéro de dépôt: 17801032.8
(22) Date de dépôt: 13.11.2017
(51) Int. Cl.: B09B 3/00, A47J 31/44, B03B 9/06, B09B 5/00, B65B 69/00, B29B 17/00

(54) **PRÉTRAITEMENT DE CAPSULES POUR BOISSONS CHAUDES ET EMBALLAGES DE PRODUITS COSMÉTIQUES AVANT RECYCLAGE ET VALORISATION**
VORVERARBEITUNG VON HEISSGETRÄNKEKAPSELN UND VERPACKUNGEN FÜR KOSMETIKPRODUKTE VOR DER WIEDERVERWERTUNG UND WIEDERGEWINNUNG
PREPROCESSING OF HOT-DRINK CAPSULES AND COSMETIC-PRODUCT PACKAGING BEFORE RECYCLING AND RECOVERY

(30) Priorité: 21.11.2016 BE 201605866
(43) Date de publication de la demande: 25.09.2019
(73) Titulaire: Centre de Recherches Métallurgiques ASBL - Centrum voor Research in de Metallurgie VZW, 1000 Bruxelles (BE)
(72) Inventeur: STEYLS, Didier, 1170 Bruxxelles (BE); NELIS, Adrien, 5030 Gembloux (BE); MARIQUE, Christian, 4042 Liers (Herstal) (BE); DORMANN, Marcel, 4600 Vise (BE)
(74) Mandataire: AWA Benelux
(86) Numéro de dépôt international: PCT/EP2017/079068
(87) Numéro de publication internationale: WO 2018/091415

(56) Documents cités:
- WO-A1-2009/153298
- WO-A1-2016/120667
- FR-A1- 2 937 627
- GB-A- 191 220 571
- GB-A- 377 010
- GB-A- 460 981

## Description

### Objet de l'invention

La présente invention se rapporte au domaine du recyclage des capsules utilisées pour la réalisation de boissons chaudes sous pression (café, thé, autres infusions) ainsi qu'aux emballages de produits cosmétiques ou pharmaceutiques. On vise plus particulièrement une opération originale de pré-conditionnement et de purification de ces capsules et emballages selon deux flux distincts : le conteneur en aluminium d'une part et le contenu résiduel constitué de matière organique humide ou sèche d'autre part (marc de café ou thé, crèmes, liquides, etc.).

De la sorte, l'aluminium, débarrassé de ces matières organiques, peut rentrer dans un circuit de recyclage (voir par exemple la demande belge antérieure BE 2016/5672), tandis que le résidu organique peut être utilisé comme source alternative de carbone, d'engrais ou de carburant écologique.

### Etat de la technique

De plus en plus de déchetteries communales, municipalités, entreprises ou individus disposent de conteneurs dédiés à la récolte de capsules en aluminium et/ou plastique pour boissons chaudes telles que café, thé ou autres infusions. Ces dernières peuvent aussi être déposées directement par les collectivités ou individus dans les différents points de ventes, voire rendues au service postal lors de la distribution du courrier. Cette démarche est à présent encouragée par les fabricants de capsules afin de centraliser à un niveau industriel le traitement des déchets générés. Il s'avère en outre que de plus en plus d'entreprises dans le domaine cosmétique récupèrent, à leur tour, leurs conteneurs en aluminium une fois usagés, ou ceux qui ont subi un défaut de fabrication.

Au stade actuel, les capsules de boissons chaudes parviennent à des usines de tri après avoir été récupérées dans les divers centres de collecte. Ces capsules y subissent une étape de broyage suivie d'une étape de tamisage. Les particules d'aluminium, débarrassées d'une partie seulement de leur contenu, sont destinées à être refondues dans des unités spécialisées. Le résidu organique est destiné à emprunter une voie de valorisation dite écologique (source d'énergie ou compostage). En revanche, les emballages en aluminium de firmes cosmétiques ou pharmaceutiques sont retournés ou conservés chez le fabricant avant d'être détruits ou revendus à très bas prix (voire à coût négatif).

Cependant, les voies actuelles de récupération ne sont pas optimales et le taux parfois encore élevé de résidus organiques non séparés des emballages en aluminium empêche le recyclage correct de celui-ci.

La plupart des documents de l'état de la technique décrivent des machines et procédés permettant de séparer les capsules en aluminium et/ou plastique du marc de café ou autres résidus organiques qu'elles contiennent, souvent dans un appareil domestique, situé donc à proximité de l'utilisateur et parfois au sein même de la machine à haute pression.

Le document US 2010/0212520 A1 divulgue un procédé permettant de séparer l'aluminium des capsules de café usagées en les vidant de leur marc et en réduisant l'encombrement par écrasement pour le recyclage. Le dispositif est constitué d'un piston de vidange permettant d'emboutir le corps de la capsule usagée en vue d'en retourner l'enveloppe. Le marc est éjecté par l'éclatement de la paroi perforée et récupéré dans un premier récipient. Un piston de déplacement latéral transfère la capsule vide vers un piston d'écrasement. Ensuite, la capsule écrasée est collectée dans le deuxième récipient. Le dispositif est destiné à séparer les résidus de café de l'aluminium.

Le document FR 2 937 627 A1 divulgue un dispositif permettant de retourner les capsules usagées et les séparer du café qu'elles contiennent. Ce dispositif comporte une bride de verrouillage entourant le fond d'une capsule pour maintenir cette capsule entre un tube inférieur et un tube supérieur. Un piston coulisse à l'intérieur du tube supérieur de manière à retourner la capsule et lui donner une forme inverse de celle de départ. Un bord supérieur du tube inférieur est coupant pour faciliter la rupture de l'opercule de la capsule. Les capsules ainsi traitées peuvent être empilables dans les emballages d'origine pour un meilleur conditionnement, une meilleure collecte ou un transport facilité. Le dispositif est utilisable pour réaliser une machine individuelle, collective, voire industrielle.

Le document DE 10 2008 041 793 A1 se rapporte à un dispositif comportant, à des fins de recyclage, une unité de coupe destinée à couper partiellement le couvercle d'une capsule de poudre de boisson à usage unique, en particulier d'une capsule de café usagée, et une unité de maintien pour la réception de la capsule de façon à être retenue automatiquement ou enserrée. Le dispositif déplace la capsule, qui est placée dans l'unité de maintien, vers l'unité de coupe, afin de découper le couvercle. Ce dispositif permet une valorisation écologique séparée des constituants de la capsule à boissons.

La société américaine Keurig a également développé un petit appareil de maintien et de coupe rotative de capsules de préférence de type K-Cup^{®}, qui permet de séparer manuellement le godet en plastique du couvercle en aluminium, en vue de leur recyclage, et du filtre contenant le marc de café, en vue de son compostage.

Le document EP 2 291 312 B1 divulgue, dans le cadre de la séparation d'un emballage d'une capsule usagée, notamment réalisée en métal tel que l'aluminium et/ou en plastique, d'un ingrédient d'aliment ou de boisson contenu dans la capsule, en vue de recueillir séparément l'emballage de capsule ouvert et l'ingrédient de capsule pour un traitement par des filières de recyclage habituelles, l'utilisation d'un appareil comprenant des moyens pour ouvrir l'emballage de la capsule introduite dans ledit appareil et pour retirer l'ingrédient de la capsule de l'emballage de la capsule ouverte, les moyens d'ouverture et de retrait étant disposés pour être mis en rotation par rapport à l'emballage de la capsule introduite et pour intercepter l'emballage de capsule; des moyens pour séparer l'emballage de capsule ouvert de l'ingrédient de la capsule; des moyens pour collecter l'emballage de capsule ouvert; et des moyens pour collecter l'ingrédient de la capsule. En particulier, les moyens d'ouverture et de retrait peuvent comprendre un dispositif de hachage, déchiquetage ou broyage coopérant avec une vis d'Archimède pour entraîner la capsule sur le dispositif de hachage, déchiquetage ou broyage. Ces moyens peuvent comprendre un arbre d'entraînement rotatif comme un arbre vertical à partir duquel un ou plusieurs organes de choc et/ou de coupe s'étendent radialement. En particulier encore, les moyens de séparation peuvent comprendre au moins un tamis à mailles ou un tamis constitué d'un organe perforé en forme de plaque, pour permettre le passage de l'ingrédient de capsule et pour empêcher le passage de l'emballage de capsule ou de parties de celui-ci.

Le document WO 2016/120667 A1 divulgue un appareil domestique pour le traitement de capsules ou cartouches usagées, par exemple contenant du marc de café ou d'autres infusions, en vue de la séparation de la matière organique et de l'emballage restant.

Aucune de ces divulgations ne propose une solution industrielle pour la séparation, le traitement ou la purification des déchets correspondants.

De plus, actuellement, même quand un procédé industriel de séparation du marc de café ou thé des capsules en aluminium et/ou plastique a été mis au point par les sociétés de recyclage des capsules en utilisant des machines de broyage et tamisage, par exemple l'aluminium récupéré n'est souvent pas de bonne qualité et est difficilement accepté par les fonderies du fait qu'il est contaminé par des résidus de plastique, outre les déchets organiques. Les performances en termes de séparation du marc sont limitées à cause de l'humidité contenue dans les capsules, d'autant plus que ces capsules sont souvent collectées dans des sacs en plastique fermés hermétiquement.

### Buts de l'invention

La présente invention vise à fournir une nouvelle solution plus efficace, plus rapide et plus compacte pour le pré-conditionnement et nettoyage des capsules usées de boissons chaudes en aluminium (café, thé ou autres) et des emballages de produits cosmétiques et pharmaceutiques en aluminium (tubes de crème, flacons, aérosols, etc.) en vue du recyclage et de la valorisation de leurs constituants respectifs.

L'invention a en particulier pour but de proposer une alternative innovante au prétraitement actuel des capsules et emballages. Le cycle de traitement des capsules de boissons chaudes usagées devrait dès lors être plus rapide, plus efficace, moins cher et permettre de réduire le gaspillage de matières et d'énergie.

### Principaux éléments caractéristiques de l'invention

La présente invention se rapporte à un procédé industriel de prétraitement, conditionnement, recyclage et valorisation de capsules usagées dans la réalisation de boissons chaudes sous pression et d'emballages de produits cosmétiques ou pharmaceutiques, comprenant un conteneur au moins en partie en aluminium et un contenu sous forme de résidus organiques, ledit procédé comportant les étapes suivantes :
- on collecte les capsules ou emballages ;
- on alimente un mélangeur intensif industriel rotatif avec les capsules ou emballages ;
- on procède à un déchirement ou une éventration des capsules ou emballages par centrifugation et attrition lors d'au moins un passage dans le mélangeur intensif, donnant lieu à un mélange de résidus de conteneur de différentes tailles et de résidus organiques libérés des capsules ou emballages, le temps de rotation des outils de mélange du mélangeur intensif étant compris entre 15 et 45 secondes ;
- on procède à un criblage dudit mélange pour séparer les résidus de conteneur d'une part et les résidus organiques d'autre part, l'étape de criblage comportant au moins un passage sur le premier tamis suivi par un passage sur le second tamis, l'aluminium étant récupéré dans les refus des cribles et la partie organique étant retrouvée majoritairement dans le tamisât ; et
- on procède au recyclage des résidus de conteneur en aluminium obtenus par le criblage précité dans un four de fusion et à la valorisation des résidus organiques sous forme de compostage, de valorisation énergétique ou comme source alternative de carbone.

Ledit mélangeur intensif industriel rotatif utilisé selon l'invention comprend :
- une cuve rotative de grande capacité pour acheminer les capsules ou emballages dans une zone comportant des outils internes ;
- un ou plusieurs outils internes de mélange disposés excentriquement dans la cuve, dont la vitesse propre de rotation est comprise entre 70 et 4500 tours/minute, de préférence entre 1000 et 2000 tours/minute, éventuellement à contre-courant de la rotation de la cuve, pour assurer l'éventrement et l'attrition des capsules ou emballages ;
- un racleur de fond qui assure un mouvement vertical continu d'un courant de mélange, en empêchant toute adhérence sur la paroi et le fond de la cuve et permettant d'accélérer la vidange de la cuve à la fin du temps de mélange.
Le procédé selon l'invention utilise également des moyens de criblage, en sortie du mélangeur intensif, comprenant un premier tamis dont la la taille de maille est comprise entre 6 et 10 mm et un second tamis dont la taille de maille est comprise entre 1 et 3 mm.

Selon l'invention, l'étape de criblage comporte un double passage en série respectivement sur un premier tamis et sur un second tamis, la taille de maille du second tamis étant inférieure à la taille de maille du premier tamis.

La cuve rotative est en rotation lente et sa capacité est comprise entre quelques dizaines de litres (typiquement 40 litres) et quelques mètres cubes (jusqu'à 7 m³ pour un mélangeur intensif Eirich de type R). Les outils internes de mélange excentrés se présentent généralement sous forme de pales ou picots.

Le procédé de traitement selon l'invention est particulièrement adapté lorsque les résidus organiques sont du marc de café, de thé ou d'autres infusions, ou encore des fluides ou émulsions de produits cosmétiques ou pharmaceutiques.

Le procédé de traitement selon l'invention est particulièrement adapté lorsque le conteneur de capsule pour boisson chaude comprend par exemple une coupelle à laquelle est scellé un opercule, tous deux pouvant être réalisés de préférence en aluminium, en composite aluminium/plastique, en composite aluminium / plastique / papier, ou lorsque l'emballage de produits cosmétiques ou pharmaceutiques comporte par exemple un conteneur sous forme de tube, flacon ou aérosol en aluminium.

Le procédé de traitement selon l'invention est particulièrement adapté lorsque la masse totale de chaque capsule est comprise par exemple entre 2 et 20 g et la proportion massique de résidus de conteneur dans le mélange de résidus de départ (dans les capsules avant ouverture) est de préférence comprise entre 5 et 40 %, de préférence encore entre 10 et 30 %, selon le taux de remplissage et le taux d'humidité du mélange précité.

Le passage sur le premier tamis retient des morceaux de capsules et laisse passer des résidus organiques et des résidus de capsules tandis que le passage sur le second tamis retient des paillettes d'aluminium et laisse passer des résidus organiques.

Les résidus de capsules et les paillettes contiennent des résidus secs d'aluminium et/ou de plastique et/ou de papier, des résidus secs organiques et de l'eau.

Selon une forme d'exécution particulière, le procédé de l'invention comporte en outre au moins deux passages dans le mélangeur intensif, le premier passage générant la séparation des résidus de conteneur dans les refus des cribles pour l'aluminium et de la partie organique majoritairement dans le tamisât, le mélangeur intensif étant alimenté pour le second passage par les refus du premier tamis généré lors du premier passage, le second passage générant à son tour des résidus de conteneur sous forme d'aluminium dans les refus de cribles et sous forme de résidus organiques majoritairement dans le tamisât.

### Brève description des figures

La figure 1 représente schématiquement les phases respectives de récolte (A) des capsules, de déchirement/éventration (B) des capsules et de criblage (C) de la matière obtenue après la phase précédente.
La figure 2 représente schématiquement les étapes d'une première forme d'exécution du procédé selon la présente invention.
La figure 3 représente schématiquement et avec un bilan massique détaillé les étapes d'une seconde forme d'exécution du procédé selon la présente invention.

### Description de formes d'exécution préférées de l'invention

La présente invention se rapporte à un procédé de (pré)conditionnement et nettoyage des capsules ou cartouches en aluminium et/ou plastique usagées pour la réalisation de boissons chaudes sous pression ou de conteneurs et emballages de produits cosmétiques ou pharmaceutiques. Les capsules, cartouches ou autres conteneurs visés par le procédé de l'invention sont typiquement des conteneurs fermés, prévus pour une extraction sous pression, contenant des ingrédients pour préparer une boisson mais aussi des récipients et emballages de produits cosmétiques et pharmaceutiques tels que des flacons, aérosols ou tubes.

Les conteneurs des boissons chaudes comprennent généralement une coupelle avec une face supérieure et une paroi latérale ayant une forme sensiblement tronconique ainsi qu'une face inférieure ayant un diamètre supérieur à la face supérieure, la face inférieure étant un opercule soudé sur le pourtour du rebord inférieur de la coupelle. La coupelle et son opercule peuvent se composer d'un matériau souple imperméable à l'oxygène tel que l'aluminium, un composite aluminium/plastique, un composite aluminium / plastique / papier (ou carton), du plastique pur ou multicouches, etc. (voir par exemple EP 0 512 468 A1). Dans la suite de l'exposé, le terme capsule sera utilisé pour désigner indifféremment tout conteneur adéquat tel que capsule, cartouche, etc.

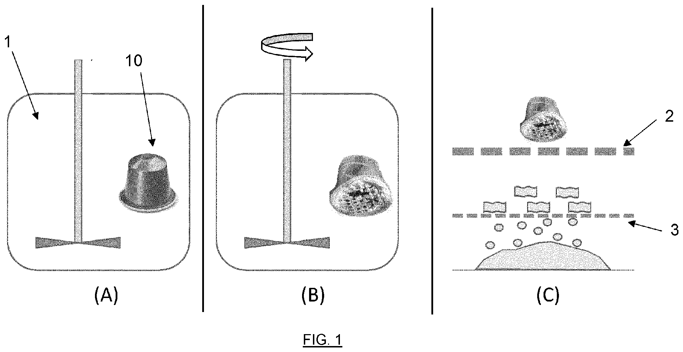

Le procédé de l'invention est essentiellement et principalement basé sur une combinaison des deux étapes suivantes :
- déchirement/ « éventration » des capsules par centrifugation spécifiquement en mélangeur intensif (FIG. 1B) ;
- criblage de la matière (FIG. 1C).

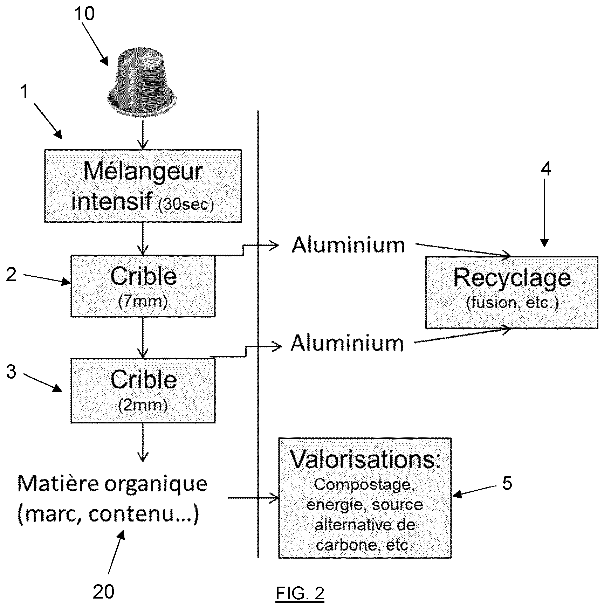

Une première forme d'exécution du procédé selon la présente invention est représentée schématiquement à la FIG. 2.

Les capsules en aluminium collectées, humides ou sèches selon l'historique de collecte et/ou stockage, et qui vont alimenter le mélangeur intensif, ont les caractéristiques suivantes :
- masse totale de la capsule : 3 à 15 g par capsule
- proportion massique d'aluminium (selon taux d'humidité et remplissage): 10 à 30 %.

Le mélangeur intensif 1 a pour but de et doit être adapté pour libérer, en un temps très court (quelques dizaines de secondes), le résidu organique contenu dans les capsules 10 par leur éventrement et leur attrition grâce aux chocs générés dans le mélangeur 1, par contact avec des outils internes tels que pales, picots, etc. tournant à très haute vitesse ainsi que par les entrechocs de la matière elle-même.

Le mélangeur intensif 1 peut par exemple être un mélangeur intensif industriel comme ceux de marque Eirich, qui comprend trois composants pouvant être adaptés de manière flexible aux exigences du process de mélange (non représenté) :
- une cuve rotative lente, de capacité allant de quelques dizaines de litres à plusieurs mètres cubes, représentant respectivement d'environ 1000 à environ 100000 capsules à boisson chaude traitées simultanément, qui achemine le mélange dans la zone des outils de mélange,
- un ou plusieurs outils internes de mélange disposés excentriquement dont le sens de rotation et la vitesse, allant de quelques centaines à plusieurs milliers de tours/minute peuvent être adaptés de manière optimale à l'application respective et
- un racleur de fond qui assure un mouvement vertical continu du courant de mélange, en empêchant toute adhérence sur la paroi et le fond de la cuve et en permettant d'accélérer la vidange de la cuve à la fin du temps de mélange.

En outre, cette étape est non seulement très efficace mais aussi très rapide par rapport à une étape de broyage conventionnelle. L'objectif est atteint en moins de 30 secondes, sur un mélangeur de laboratoire de 40 litres de batch traités. Ce résultat devrait être équivalent sur des mélangeurs de plus grande capacité. La performance d'impact, et donc de séparation du mélangeur intensif, dépend de la vitesse angulaire de l'outil et du diamètre de la cuve du mélangeur.

La deuxième phase d'exécution du procédé consiste à cribler la matière, en sortie du mélangeur intensif 1, à deux reprises en série (c'est-à-dire à la suite), à l'aide de tamis 2, 3 à mailles de calibre décroissant (par exemple 7 mm et 2 mm). La partie organique est retrouvée majoritairement dans le tamisât 20, tandis que l'aluminium est récupéré dans les refus des cribles 11, 12.

D'une part, cette partie organique peut être utilisée à des fins de compostage ou d'énergie écologique (biogaz, etc.), mais aussi comme source alternative de carbone dans l'industrie sidérurgique (briquettes de minerais autoréductrices, etc.) 5. D'autre part, l'aluminium des capsules et emballages est grâce à cette technique suffisamment purifié de son contenu pour rejoindre une filière de recyclage 4 telle que décrite par exemple dans la demande de brevet précitée (cf. BE 2016/5672).

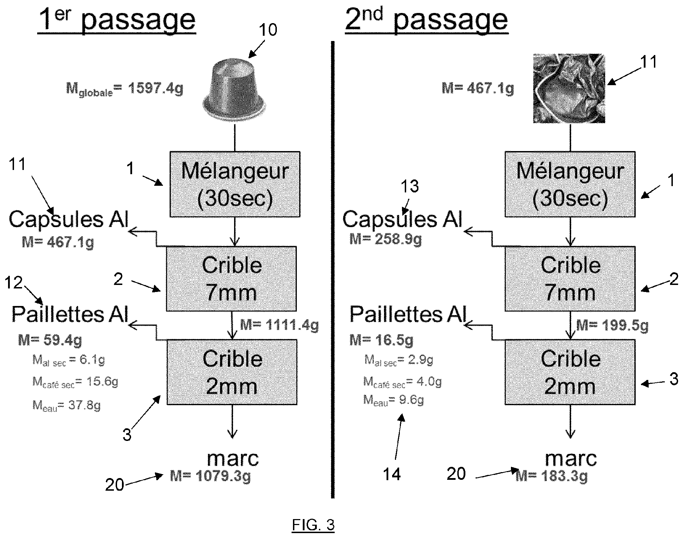

Dans une seconde forme d'exécution du procédé de l'invention représentée schématiquement à la FIG. 3, un deuxième passage des capsules dans le procédé est prévu destiné à encore améliorer la séparation. La FIG. 3 donne également un exemple de répartition massique des constituants 11, 12, 13, 14, 20 séparés par le procédé. Les deux passages ont une durée d'environ 30 secondes.

Dans une troisième forme d'exécution du procédé de l'invention, il est possible de considérer le passage de conteneurs en aluminium issus de produits cosmétiques et pharmaceutiques, présentant la forme de flacons, tubes ou aérosols. Le même procédé que ci-dessus est envisagé pour traiter ces produits, à savoir : libération du contenu par éventration et centrifugation provoquées dans l'enceinte du mélangeur intensif, suivie du criblage des matières afin d'obtenir l'aluminium purifié de son contenu organique.

Ainsi les résultats de prétraitements par mélangeur intensif sont excellents pour des temps de séjour courts en comparaison avec le système de prétraitement actuel dans les sociétés de collecte.

## Revendications

1. Procédé industriel de prétraitement, conditionnement, recyclage et valorisation de capsules usagées (10) dans la réalisation de boissons chaudes sous pression ou d'emballages de produits cosmétiques ou pharmaceutiques (10), comprenant un conteneur au moins en partie en aluminium et un contenu sous forme de résidus organiques, ledit procédé utilisant un mélangeur intensif industriel rotatif (1) comprenant :
- une cuve rotative lente, de capacité allant de quelques dizaines de litres à plusieurs mètres cubes, pour acheminer les capsules ou emballages dans une zone comportant des outils de mélange ;
- un ou plusieurs outils internes de mélange disposés excentriquement dans la cuve et ayant une vitesse propre de rotation par rapport à la cuve, éventuellement à contre-courant de la rotation de la cuve, pour assurer l'éventrement et l'attrition des capsules ou emballages ;
- un racleur de fond qui assure un mouvement vertical continu d'un courant de mélange, en empêchant toute adhérence sur la paroi et le fond de la cuve et permettant d'accélérer la vidange de la cuve à la fin du temps de mélange ;
ainsi que des moyens de criblage, en sortie du mélangeur intensif (1), comprenant un premier tamis (2) et un second tamis (3), la taille de maille du premier tamis (2) étant comprise entre 6 et 10mm et la taille de maille du second tamis (3) étant comprise entre 1 et 3mm ;
ledit procédé comportant les étapes suivantes :
- on collecte les capsules ou emballages ;
- on alimente le mélangeur intensif industriel rotatif (1) avec les capsules ou emballages (10) ;
- on procède à un déchirement ou une éventration des capsules ou emballages (10) par centrifugation et attrition lors d'au moins un passage dans le mélangeur intensif (1), la vitesse propre de rotation des outils internes étant comprise entre 70 et 4500 tours/minute, de préférence entre 1000 et 2000 tours/minute, pour obtenir un mélange de résidus de conteneur de différentes tailles et de résidus organiques (20) libérés des capsules ou emballages (10), le temps de rotation des outils du mélangeur intensif (10) à chaque passage étant compris entre 15 et 45 secondes ;
- on procède à un criblage dudit mélange pour séparer les résidus de conteneur d'une part et les résidus organiques d'autre part, l'étape de criblage comportant au moins un passage sur le premier tamis (2) suivi par un passage sur le second tamis (3), l'aluminium étant récupéré dans les refus des cribles (11, 13 ; 12, 14) et la partie organique étant retrouvée majoritairement dans le tamisât (20) ;
- on procède au recyclage des résidus de conteneur en aluminium obtenus par criblage (11, 13 ; 12, 14) dans un four de fusion (4). et à la valorisation des résidus organiques (20) sous forme de compostage, de valorisation énergétique ou comme source alternative de carbone (5).

2. Procédé selon la revendication 1, **caractérisé en ce que** le procédé comporte au moins deux passages dans le mélangeur intensif (1), le premier passage générant la séparation des résidus de conteneur dans les refus des cribles (11, 12) pour l'aluminium et de la partie organique majoritairement dans le tamisât (20), le mélangeur intensif (1) étant alimenté pour le second passage par les refus du premier tamis (11) généré lors du premier passage, le second passage générant à son tour des résidus de conteneur sous forme d'aluminium dans les refus de cribles (13, 14) et sous forme de résidus organiques majoritairement dans le tamisât (20).

## Patentansprüche

1. Industrielles Verfahren zur Vorbehandlung, Aufbereitung, Wiederverwertung und Verwertung von gebrauchten Kapseln (10) bei der Herstellung von Heißgetränken unter Druck oder von Verpackungen für kosmetische oder pharmazeutische Produkte (10), bestehend aus einem zumindest teilweise aus Aluminium bestehenden Behälter und einem Inhalt in Form von organischen Rückständen, wobei das Verfahren einen industriellen Rotationsmischer (1) verwendet, der Folgendes umfasst:
- einen langsam rotierenden Behälter mit einem Fassungsvermögen von einigen Dutzend Litern bis zu mehreren Kubikmetern, um die Kapseln oder Verpackungen in einen Bereich mit Mischwerkzeugen zu befördern;
- ein oder mehrere interne Mischwerkzeuge, die exzentrisch im Behälter angeordnet sind und eine eigene Drehgeschwindigkeit relativ zum Behälter haben, gegebenenfalls entgegen der Drehrichtung des Behälters, um das Aufbrechen und den Abrieb der Kapseln oder Verpackungen zu gewährleisten;
- einen Bodenschaber, der eine kontinuierliche vertikale Bewegung eines Mischstroms gewährleistet, ein Anhaften an der Wand und am Boden des Behälters verhindert und eine schnellere Entleerung des Behälters am Ende der Mischzeit ermöglicht;
sowie Siebvorrichtungen am Ausgang des Intensivmischers (1), die ein erstes Sieb (2) und ein zweites Sieb (3) umfassen, wobei die Maschenweite des ersten Siebs (2) zwischen 6 und 10 mm und die Maschenweite des zweiten Siebs (3) zwischen 1 und 3 mm beträgt;
wobei das Verfahren die folgenden Schritte umfasst:
- die Kapseln oder Verpackungen werden gesammelt;
- der industrielle Rotationsintensivmischer (1) wird mit den Kapseln oder Verpackungen (10) beschickt;
- die Kapseln oder Verpackungen (10) werden durch Zentrifugieren und Reiben während mindestens eines Durchlaufs durch den Intensivmischer (1) aufgerissen oder aufgeschlitzt, wobei die Eigenrotationsgeschwindigkeit der Innenwerkzeuge zwischen 70 und 4500 Umdrehungen/Minute liegt, vorzugsweise zwischen 1000 und 2000 Umdrehungen/Minute, um eine Mischung aus Behälterresten unterschiedlicher Größe und aus den Kapseln oder Verpackungen (10) freigesetzten organischen Resten (20) zu erhalten, wobei die Drehzeit der Werkzeuge des Intensivmischers (10) bei jedem Durchgang zwischen 15 und 45 Sekunden liegt;
- die Mischung wird gesiebt, um die Behälterrückstände einerseits und die organischen Rückstände andererseits zu trennen, wobei der Siebschritt mindestens einen Durchgang durch das erste Sieb (2) gefolgt von einem Durchgang durch das zweite Sieb (3) umfasst, wobei das Aluminium aus den Siebrückständen (11, 13; 12, 14) zurückgewonnen wird und der organische Teil überwiegend im Siebrückstand (20) wiedergefunden wird;
- die durch Sieben (11, 13; 12, 14) gewonnenen Aluminiumbehälterrückstände werden in einem Schmelzofen (4) recycelt und die organischen Rückstände (20) werden in Form von Kompostierung, energetischer Verwertung oder als alternative Kohlenstoffquelle (5) verwertet.

2. Verfahren nach Anspruch 1, **dadurch gekennzeichnet, dass** das Verfahren mindestens zwei Durchgänge durch den Intensivmischer (1) umfasst, wobei beim ersten Durchgang die Behälterrückstände in den Siebrückständen (11, 12) für Aluminium und der organische Anteil überwiegend im Siebgut (20) getrennt werden, wobei der Intensivmischer (1) für den zweiten Durchgang mit den beim ersten Durchgang anfallenden Siebrückständen (11) beschickt wird und beim zweiten Durchgang wiederum Behälterrückstände in Form von Aluminium in den Siebrückständen (13, 14) und in Form von organischen Rückständen überwiegend im Siebgut (20) entstehen.

## Claims

1. Industrial process for the pre-treatment, conditioning, recycling and recovery of used capsules (10) in the production of hot beverages under pressure or packaging for cosmetic or pharmaceutical products (10), comprising a container made at least partly of aluminium and a content in the form of organic residues, said process using an intensive industrial rotary mixer (1) comprising:
- a slow rotating tank, with a capacity ranging from a few dozen litres to several cubic metres, for conveying the capsules or packaging into an area with mixing tools;
- one or more internal mixing tools arranged eccentrically in the tank and having their own rotation speed relative to the tank, possibly in counter-current to the rotation of the tank, to ensure the bursting and attrition of the capsules or packaging;
- a bottom scraper that ensures the continuous vertical motion of a mixing flow, preventing any adhesion to the wall and bottom of the tank and allowing to empty the tank more quickly at the end of the mixing time;
as well as screening means, at the outlet of the intensive mixer (1), comprising a first screen (2) and a second screen (3), the mesh size of the first screen (2) being between 6 and 10 mm and the mesh size of the second screen (3) being between 1 and 3 mm;
said process comprising the following steps:
- the capsules or packaging are collected;
- the industrial rotary intensive mixer (1) is fed with the capsules or packaging (10);
- the capsules or packaging (10) are torn or burst by centrifugation and attrition during at least one pass through the intensive mixer (1), the internal tools rotating at a speed of between 70 and 4,500 rpm, preferably between 1000 and 2000 rpm, to obtain a mixture of container residues of different sizes and organic residues (20) released from the capsules or packaging (10), the rotation time of the tools of the intensive mixer (10) during each pass being between 15 and 45 seconds;
- the mixture is screened to separate the container residues on the one hand and the organic residues on the other hand, the screening step comprising at least one pass through the first screen (2) followed by a pass through the second screen (3), the aluminium being recovered from the screen rejects (11, 13; 12, 14) and the organic fraction being found mainly in the screenings (20);
- the aluminium container residues obtained by screening (11, 13; 12, 14) are recycled in a melting furnace (4) and the organic residues (20) are recovered in the form of compost, energy recovery or as an alternative source of carbon (5).

2. Process according to Claim 1, **characterised in that** it comprises at least two passes through the intensive mixer (1), the first pass separating the container residues into the screen rejects (11, 12) for aluminium and the organic fraction mainly in the screenings (20), the intensive mixer (1) being fed for the second pass by the rejects (11) from the first screen generated during the first pass, the second pass in turn generating container residues in the form of aluminium in the screen rejects (13, 14) and in the form of organic residues mainly in the screenings (20).
